(19)

**Europäisches Patentamt**
**European Patent Office**
**Office européen des brevets**

(11) **EP 4 697 717 A1**

(12) **EUROPEAN PATENT APPLICATION**

(43) Date of publication:
**18.02.2026   Bulletin 2026/08**

(21) Application number: **24306358.3**

(22) Date of filing: **14.08.2024**

(51) International Patent Classification (IPC):
**H04N 19/50** (2014.01)

(52) Cooperative Patent Classification (CPC):
**H04N 19/50; H04N 19/597**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
- **DAMODARAN, Bharath Bhushan**
  **56000 VANNES (FR)**
- **LAMBERT, Anne**
  **35250 SAINT-AUBIN-D'AUBIGNE (FR)**
- **SCHNITZLER, Francois**
  **56890 SAINT AVE (FR)**
- **LE MEUR, Olivier**
  **35160 TALENSAC (FR)**

(74) Representative: **Interdigital**
**Immeuble ZEN 2**
**845 A, avenue des Champs Blancs**
**35510 Cesson-Sévigné (FR)**

(54) **DIFFERENTIAL CODING OF IMPLICIT NEURAL REPRESENTATION FOR VIDEO COMPRESSION**

(57)    In various implementations, method and devices are disclosed that encode or decode a sequence of images with an Implicit Neural network Representation INR. For instance, the encoding method comprises obtaining parameters of at least one current INR network for a current image of the sequence of images; obtaining parameters of at least one previous INR network for a previous image of the current image in the sequence of images; and encoding residual data between the parameters of the at least one current INR network and the parameters of the at least one previous INR network. According to different variant, the parameters may be quantized and/or dequantized before encoding. According to different variant, the parameter encoding uses entropy coding or neural network coding including quantization and deep CABAC.

input signal

↓

| Obtain INR for a current image | 410 |

↓

| Obtain INR for a previous image | 420 |

↓

| Encode residual INR parameters | 430 |

↓

output bitstream

400

**FIG. 4**

EP 4 697 717 A1

# EP 4 697 717 A1

## Description

### TECHNICAL FIELD

The present application is related to a method and an apparatus for neural compression.

### BACKGROUND

Neural compression or learning-based compression is the application of neural networks and other machine learning methods to data compression. Those techniques are currently being investigated by MPEG, and there is a new ad-hoc group which focuses on the Implicit Neural Representation-based compression (INR-based) within Working Group 4. Typically, INR-based compression techniques have a far lower computational complexity than end-to-end neural compression approaches

### BRIEF SUMMARY

Briefly stated, in one or more embodiments, a method of video decoding is disclosed that comprises obtaining one or more parameters of at least one current INR (Implicit Neural Representation) network for a current image of the sequence of images or of 3D scene; obtaining one or more parameters of at least one previous INR network for a previous image of the current image in the sequence of images or of 3D scene; and encoding residual data between the one or more parameters of the at least one current INR network and the one or more parameters of the at least one previous INR network.

In i one or more embodiments, a method of video encoding is disclosed that comprises obtaining one or more parameters of at least one current INR (Implicit Neural Representation) network for a current image of the sequence of images or of 3D scene; obtaining one or more parameters of at least one previous INR network for a previous image of the current image in the sequence of images or of 3D scene; and encoding residual data between the one or more parameters of the at least one current INR network and the one or more parameters of the at least one previous INR network.

One or more embodiments also provide an apparatus for encoding/decoding video comprising one or more processors and at least one memory coupled to said one or more processors, wherein said one or more processors are configured to perform the encoding/decoding method according to any of the embodiments described herein.

One or more embodiments also provide a computer program comprising instructions which when executed by one or more processors cause the one or more processors to perform the decoding/encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 illustrates a block diagram of a system within which aspects of the present embodiments may be implemented;
FIG. 2 illustrates a simple neural network used for Implicit Neural Representation (INR);
FIG. 3 illustrates a typical process to encode a signal using INR;
FIG. 4 illustrates a process to encode a signal using differential coding of INR according to one or more embodiments of the present disclosure;
FIG. 5 illustrates a process to decode a signal using differential coding of INR according to one or more embodiments of the present disclosure;
FIG. 6 illustrates a process to encode a signal using differential coding of INR after a quantization step, according to an embodiment;
FIG. 7 illustrates a process to decode a signal using differential coding of INR after a quantization step, according to an embodiment;
FIG. 8 illustrates a process to encode a signal using differential coding of INR after a quantization step and a dequantization step, according to one or more embodiments of the present disclosure;

FIG. 9 illustrates a process to decode a signal using differential coding of INR after a quantization and a dequantization step, according to an embodiment;

FIG. 10 illustrates a process to encode a signal using differential coding of INR with Neural Network Compression NNC, according to one or more embodiments; and

FIG. 11 illustrates a process to decode a signal using differential coding of INR with Neural Network Compression NNC, according to an embodiment.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

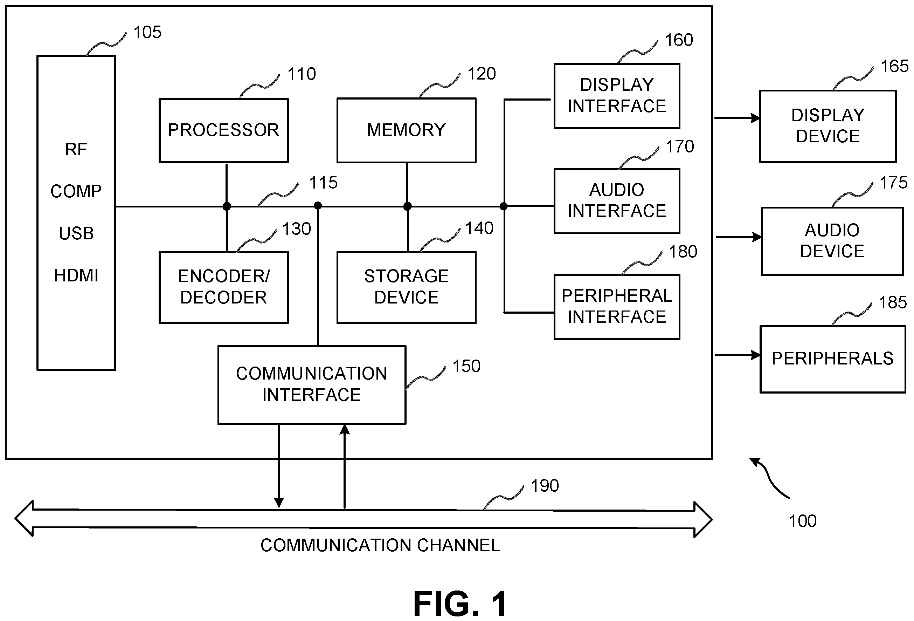

Referring to the drawings, there is shown in FIG. 1 a block diagram of an example of a system in which various aspects and embodiments may be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, JPEG Pleno, MPEG-I, HEVC, VVC or MPEG VCM.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing. Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

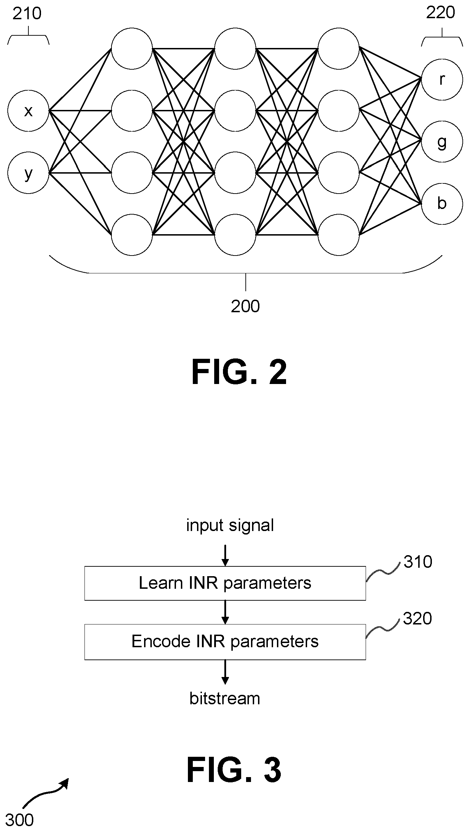

FIG. 2 illustrates a simple neural network used for implicit neural representation (INR). Such a neural network used for INR can be referred to as an INR network. For clarity, we use for illustration a 2D signal such as an image, but INR can be used for signals of any dimension. INR parameterizes a signal as a function 200, which takes coordinates 210 as input and outputs approximated values 220 of a signal at these coordinates. INR has recently been applied to images, 2D videos or 3D objects among other applications. In the image case, the inputs (210) can be pixel coordinates $(x,y)$ and the INR may output 220 the color values $(r,g,b)$ or $(y,u,v)$ of the input pixels. In the video case, the input can include the frame index t in addition to pixel coordinates.

The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network 200 is typically a neural network composed of multiple neural layers, such as fully connected layers. In FIG. 2, the network has four neural layers. Intermediate outputs are represented by circles. Each neural layer can be described as a function that first multiplies the input by a tensor, adds a vector called the bias and then applies a nonlinear function on the resulting values. In this document, we may also refer to "neural layer" simply as "layer." The shape (and other characteristics) of the tensor and the type of non-linear functions are called the architecture of the network. We will denote the values of the tensor and the bias by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

FIG. 3 illustrates a typical process to encode 300 a signal using INR. This is done by optimizing 310 the parameters $\theta$ (or a subset of them) of the INR network to reconstruct the signal and optionally encoding 320 parameters to create the output bitstream. For an image $I$ of size (M $\times$ N), the parameters θ or (the chosen subset) can for example be optimized by minimizing the following loss function:

$$Loss = D(I, f_{\boldsymbol{\theta}}) + \lambda\, R(\theta) \qquad\qquad (1)$$

$$D_{MSE} = \frac{1}{MN}\sum_{x,y}(I(x,y) - f_{\boldsymbol{\theta}}(x,y))^2 \qquad\qquad (2)$$

where D is a distortion which quantifies the difference between the image predicted (reconstructed) by $f_\theta$ and the original image $I$, $R$ is the bitrate of the encoded parameters and $\lambda$ a trade-off parameter between D and $R$, $D$ could be any differentiable distortion measure, such as mean squared error as shown in Eq. (2), and M and N are the width and height of an image, respectively. Other metrics such as LPIPS (Learned Perceptual Image Patch Similarity) can also be used in this case. The optimization of the parameters $\theta$ is typically performed by a machine learning approach such as a batch/-stochastic gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs (x,y) for all $x \in \{0,1, \dots , 255\}$ and $y \in \{0,1, \dots,255\}$. Other choices are possible, for example to upsample, downsample or extend the original image.

Using one INR network globally for the whole signal makes learning difficult, as all parameters contribute to all values and lead to a large network as it must encode all details of the signal. To overcome this, a commonly owned EP Application No. 23305282.8 ("Coding Unit Based Implicit Neural Representation (INR)") proposed a first approach with a coding tree unit based Implicit Neural Representation. More specifically, we proposed to consider the input domain as a coding tree unit (CTU) and to partition it into coding units (CU) and to learn a set of different values for the INR parameters for each coding unit.

In a second approach, we describe a method to compress an image or a video, using a learned dictionary of INR representation that has been known or trained beforehand, instead of a simple function $f_\theta$. The training of the dictionary can be performed, for example, as described in a commonly owned EP Application No. 23306188.6 ("Approximating Implicit Neural Representation through Learnt Dictionary Atoms"), where we propose to decompose the INR network into head and tail layers, where the head layers are responsible for the global information and tail for the local information and the weights of the head layers are approximated through the dictionary basis. By doing so, the INR network can be encoded by the weights of the non-approximated parts and some additional information that describes the approximated parts. In the present document, we may take as an example an INR divided into head $h$ and tail $t$ layers, as $f_\theta = t_{\theta_t}\, h_{\theta_h}$, and approximate $\theta_h$. This is an example of a decomposition into a composited representation, and other types of decompositions may be used without any loss of generality. For the approximation, we proposed to learn a dictionary $D = [\boldsymbol{d_1}, \boldsymbol{d_2}, \dots \boldsymbol{d_K}]$ with K INR atoms so that each head layer is approximated (represented) using a sparse linear combination of the atoms of the dictionary. That is,

$$\widehat{\boldsymbol{\theta}}_h = \boldsymbol{D\gamma} \approx \boldsymbol{\theta}_h$$

The sparse coefficients γ are for example approximated by optimizing the following loss function,

$$\arg\min_{\boldsymbol{\gamma}}\|\boldsymbol{\theta_h} - \boldsymbol{D\gamma}\| + \alpha\,\|\boldsymbol{\gamma}\|_1, \qquad\qquad (3)$$

where $\theta_\mathbf{h}$ is the weights of the head layers, $\boldsymbol{D}$ is the learnt dictionary, and $\gamma$ is the sparse coefficients to be optimized. To enforce the sparsity in the coefficient vector, the L1 norm is used and $\alpha$ is the trade-off between the two terms in the equation.

In another commonly owned EP Application No. 23306514.3 ("Dictionary-Driven Implicit Neural Representation for image and video coding"), we have described how a signal or a part of a signal can be encoded by approximating some layers of the INR network using a dictionary approximation. This also allows encoding the INR network by the weights of the non-approximated parts and some additional information that describes the approximated parts. The non-approximated parts are the mixture coefficient of the dictionary atoms and the approximated parts are the tail networks parameters $t_{\theta_t}$ and they are encoded in the bitstream using any entropic coder for each frame separately.

However, there is still room for improvement of the performance of INR encoding.

In one or more embodiments, we propose a differential coding mechanism for encoding the parameters of an INR network. Advantageously, the disclosed differential coding mechanisms may apply for encoding the parameters of the non-approximated parts and approximated parts of the INR networks using dictionary approximation of the two successive video frames. Indeed, we have recognized that the weights $\theta$ of the INR between the successive video frames may be correlated, thus encoding the weights $\theta$ of INR for each frame individually might not yield optimal bitlength of the bitstream. Thus, the present principles propose a differential encoding and decoding mechanism to utilize the information from the previously decoded frame on the weights $\theta$ of INR to encode the weights $\theta$ of INR of the current frame.

The weights $\theta$ of INR may be encoded optimally in a bitstream using any entropic coder. In a variant, the weights $\theta$ of INR may be encoded on the neural network compression standard developed in Neural Network Coding (NNC)/ ISO/IEC 15938-17 or MPEG-7 part 17. Advantageously, the gain based on the neural network compression standard might be higher as the NNC standard uses CABAC/deepCABAC to encode quantized weights into a bitstream and thus it is optimal for differential encoding especially when it contains zero values (non-significant bits).

The present document proposes a method for encoding the weights of INR for the 2D video using differential coding into a bitstream using different encoding procedures including NNC standard. The present document further proposes a method for decoding from the weights of INR that were differentially coded along with a step for reconstructing of 2D video signal from the reconstructed INR weights. Advantageously, the present principles also apply to 3D video, for instance represented using a 3D scene.

Video data (e.g., one or more video frames) is encoded generally as described below as a plurality of sequence of video frames. Let $\{X_1, ...., X_K\}$ be the video frames of a sequence of length $K$. Let $\{\theta_1, \theta_2, ..., \theta_K\}$ be the parameters of the INR network for $K$ frame of the sequence, these parameters include all the trainable parameters in the INR network. Without loss of generality, we assume $\{\theta_1, \theta_2, ..., \theta_K\}$ may be the parameters of any INR based representation (such as the previously described native INR (also referred to as Vanilla INR in machine learning), CTU-INR, dictionary-based INR representation, etc) for the frames 1,2, ...,$K$. A sequence of video frames (or images) may be a Group of Pictures (GOP). According to different variant, a GOP may be computed using scheme in the literature. For instance, the video may be partitioning into GOP based on the statistics of the video or by just naive partition. In the following, the term "frame" or "image" or "picture" will be used indifferently.

### Differential Encoding of INR into a bitstream

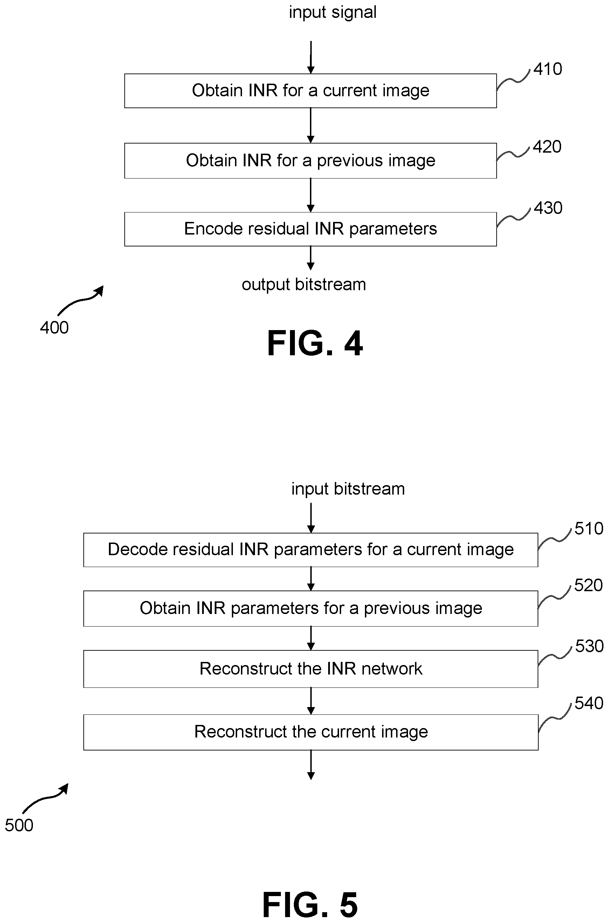

FIG. 4 illustrates a process to encode 400 a signal using differential coding of INR, according to one or more embodiments of the present disclosure. In a first step 410, one or more parameters $\theta_t$ of at least one current INR (Implicit Neural Representation) network are obtained for a current image of the sequence of images or of 3D scene. As described above, INR network may be any one of a Vanilla INR, CTU-INR, dictionary-based INR and the parameters may be obtained by any method for learning the INR as described with FIG. 3. In a second step 420, one or more parameters $\theta_{t-1}$ of at least one previous INR network for a previous image of the current image in the sequence of images. According to a variant, the previous image of index $t$ - 1 is temporally adjacent to the current image of index $t$. For instance, the parameters $\theta_{t-1}$ may be stored at the previous iteration of the encoding method. According to an initializing step not shown on FIG. 4, the parameters may be initialized at the beginning of the sequence, such that for the first frame of the sequence t=1, the parameters $\theta_1$ of the INR themselves are encoded. In a third step 430, the difference between the parameters of the current frame $t$ and previous frame $t$ - 1 is computed as $m_t = \theta_t - \theta_{t-1}$. The difference $m_t$ may be referred as residual data for INR parameters. According to different variants detailed hereafter, the parameters $\theta_t$ of the current INR and the parameters $\theta_{t-1}$ of the previous INR may be processed before or after computing the difference. For instance, a process applied to INR parameters may be a quantization or an inverse quantization process. Then, in the step 430, residual data between the one or more parameters of the at least current INR network and the one or more parameters of the at least one previous INR network are encoded into a bitstream. Any entropy coding method may be compliant with the encoding 430. According to yet another variant, NNC encoding which includes efficient quantization methods and DeepCABAC as arithmetic coding tool may be used for encoding the residual data. In the following different variants for encoding a signal using differential coding of INR are described.

Feature(s) associated with differential encoding after quantization step.

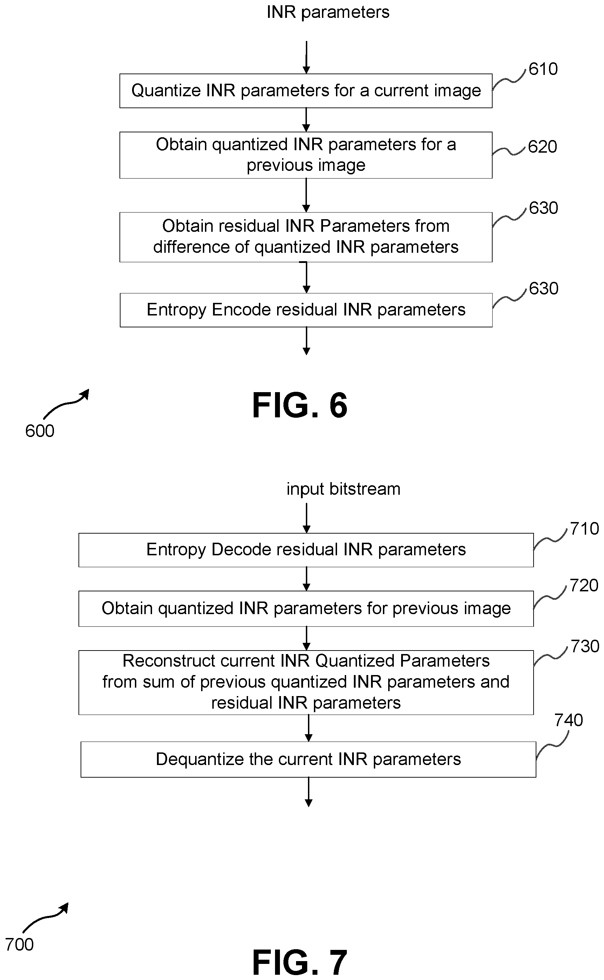

FIG. 6 illustrates a process to encode 600 a signal using differential coding of INR after a quantization step, according to one or more embodiments of the present disclosure. The process 600 of FIG. 6 may be implemented for instance in the differential coding step 430 of FIG. 4. Let g be a sequence (or GOP) of images to encode, K be the number of images in sequence. FIG. 6 illustrates the steps applied to encode a frame t based on the information of a preceding frame t-1 (i.e. for t=2... K). For the first frame (t=1) of the GOP, that may be referred as the Intra-frame or reference frame, the weights are directly encoded. The steps of FIG. 6 may also apply to the first frame given that the buffer storing the weight of the previous frame is the initializing to a default value The differential encoding of the weights for the whole GOP may be performed as follows:

- For each GOP,

    ○ For the intra-frame (t=1),

        ▪ Obtain the parameters $\theta_1$ of the INR of the intra-frame

        ▪ Quantize the parameters $\widehat{\theta_1} = Q(\theta_1)$ using any quantization scheme

        ▪ Encode the quantized parameters $\widehat{\theta_1}$ into the bit-stream using any entropic coder

    ○ for t=2... K,

        ▪ Obtain the parameters $\theta_t$ of the INR
        ▪ Quantize 610 the parameters $\hat{\theta}_t = Q(\theta_t)$ using any quantization scheme

        ▪ Get 620 the quantized parameters of the previous frame t - 1, as $\widehat{\theta_{t-1}}$ from the buffer
        ▪ Compute 630 the difference between the parameters of the current frame $t$ and previous frame $t$ - 1 as $m_t = \hat{\theta}_t - \hat{\theta}_{t-1}$
        ▪ Encode 630 $m_t$ into the bitstream using any entropic coder.

Feature(s) associated with differential encoding after quantization and dequantization step.

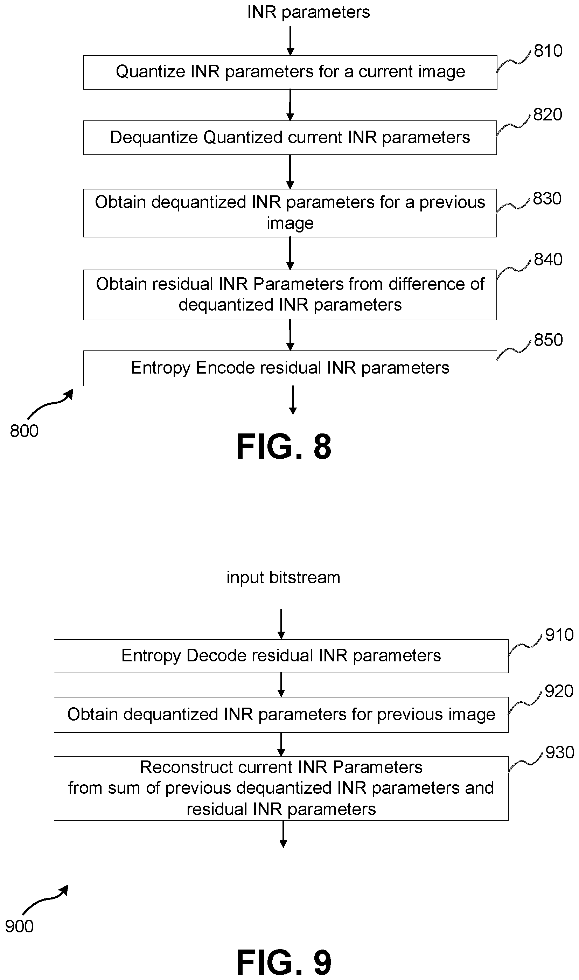

FIG. 8 illustrates a process to encode 800 a signal using differential coding of INR after a quantization and a dequantization step, according to one or more embodiments of the present disclosure. The process 800 of FIG. 6 may be implemented for instance in the differential coding step 430 of FIG. 4. Let g be a sequence (or GOP) of images to encode, K be the number of images in sequence. FIG. 8 illustrates the steps applied to encode a frame t based on the information of a preceding frame t-1 (i.e. for t=2... K). As previously, the first frame (t=1) of the GOP, that may be referred as the Intra-frame or the reference frame, is directly encoded. In this embodiment, the same encoding procedure may also be applied after the dequantization step as follows:

- For each GOP,

    ○ For the intra-frame (t=1),

        ▪ Obtain the parameters $\theta_1$ of the INR of the intra-frame

        ▪ Quantize the parameters $\widehat{\theta_1} = Q(\theta_1)$ using any quantization scheme
        ▪ Compute the dequantized parameters $\tilde{\theta}_1 = Q^{-1}(\hat{\theta}_1)$ using inverse quantization
        ▪ Encode the dequantized parameters $\tilde{\theta}_1$ into the bit-stream using any entropic coder

    ○ for t=2... K

        ▪ obtain the parameters $\theta_t$ of the INR
        ▪ Quantize 810 the parameters $\hat{\theta}_t = Q(\theta_t)$ using any quantization scheme
        ▪ Compute 820 the dequantized parameters $\tilde{\theta}_t = Q^{-1}(\hat{\theta}_t)$ using the corresponding inverse quantization
        ▪ Get 830 the dequantized parameters $\tilde{\theta}_{t-1}$ of the previous frame t - 1 from the buffer
        ▪ Compute 840 the difference between the dequantized parameters of current frame $t$ and previous frame $t$ - 1 as $m_t = \tilde{\theta}_t - \tilde{\theta}_{t-1}$. In theory, the dequantized values are close approximations of the continuous values, however in practice the dequantized values are discrete
        ▪ Encode 850 $m_t$ into the bitstream using any entropic coder.

Feature(s) associated with differential encoding with NNC.

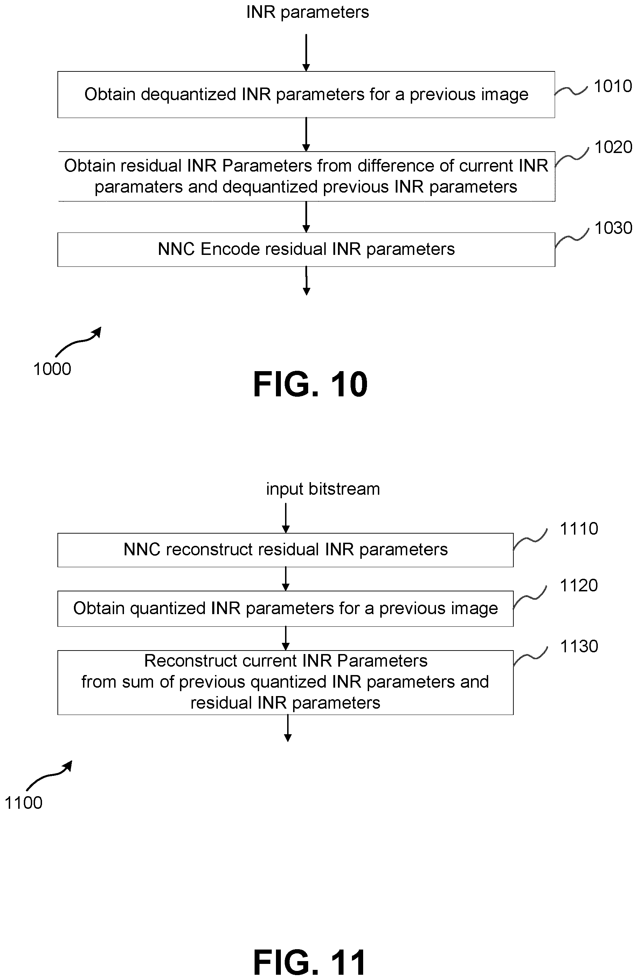

FIG. 10 illustrates a process to encode 1000 a signal using differential coding of INR with Neural Network Compression NNC, according to one or more embodiments of the present disclosure. The process 1000 of FIG. 6 may be implemented for instance in the differential coding step 430 of FIG. 4. Let g be a sequence (or GOP) of images to encode, K be the number of images in sequence. In this variant, the same encoding procedure may also be applied when the NNC standard is used, which takes the inputs as the parameters, and the Quality parameter, and outputs the bitstream. For the reconstruction it takes the input as the bitstream and outputs the dequantized parameters. As previously, FIG. 10 illustrates the steps applied to encode a frame t based on the information of a preceding frame t-1 (i.e. for t=2... K). In such scenarios, one may perform differential coding of the GOP as follows:

- For each GOP,

    ○ For the intra-frame (t=1),

        ▪ Obtain the parameters $\theta_1$ of the INR of the intra-frame
        ▪ Use NNC to compress and obtain the bitstream, then from the bitstream reconstruct the dequantized parameters. Let the dequantized parameters be $\tilde{\theta}_1 = NNC\_reconstruct(NNC\_encode(\theta_1, QP))$
        ▪ Store the $\tilde{\theta}_1$ in the buffer as, $temp = \tilde{\theta}_1$ for the next step

    ○ for t=2... K

        ▪ Obtain the parameters $\theta_t$ of the INR
        ▪ Get 1010 the dequantized parameters $\tilde{\theta}_{t-1}$ of the previous frame t - 1 from the buffer variable $temp$
        ▪ Compute 1020 the difference between the current frame t and previous frame $t$ - 1 dequantized parameters as $m_t = \theta_t - \tilde{\theta}_{t-1}$
        ▪ Encode 1030 $m_t$ into the bitstream using the NNC encoder including quantization with the user defined QP value
        ▪ Reconstruct the dequantized $m_t$ from the bitstream, and it is denoted as $\widetilde{m_t}$
        ▪ Replace the buffer as $temp = \tilde{\theta}_{t-1} + \widetilde{m_t}$

According to yet another variant of the NNC encoding of INR parameters, $m_t$ may also be computed from the dequantized parameters of the current frame as, $m_t = \tilde{\theta}_t - \tilde{\theta}_{t-1}$

In addition to the encoding the parameters in the bitstream, the hyperparameters such as the value of GOP (ie the number of images in the sequence), the quantization parameters, the quantization scheme used, and entropy coding may also be signaled to the decoder.

In a variant, the same encoding procedure may also be applied when the black box coding tools are used, where the user does not have access to the quantization scheme and entropic coding. The black box tool takes the inputs as the parameters, and the Quality parameter, and outputs the bitstream. For the reconstruction the black box takes the input as the bitstream and outputs the dequantized parameters. Thus, the user does not have access to the quantized parameters. In such scenarios, one may take advantage of the quantization scheme and entropic coding of the black box to perform differential coding. The encoding and decoding procedure of differential coding using black box tool may be similar to the NNC encoding of FIG. 10.

**Differential Decoding of INR from the bitstream**

FIG. 5 illustrates a process to decode 500 a signal using differential coding of INR, according to one or more embodiments of the present disclosure. The process of FIG. 5 is the reverse process to the encoding process of FIG. 4. In a first step 510, residual data $m_t$ for one or more parameters of at least one current INR (Implicit Neural Representation) network are decoded for a current image t of the sequence of images or of 3D scene. In a second step 520, one or more parameters $\tilde{\theta}_{t-1}$ of at least one previous INR network for a previous image of the current image in the sequence of images are obtained. As described for the encoding, INR network may be any one of a Vanilla INR, CTU-INR, dictionary-based INR and the parameters may have been obtained by any method for learning the INR as described with FIG. 3. According to a variant, the previous image of index t - 1 is temporally adjacent to the current image of index t. For instance, the parameters $\tilde{\theta}_{t-1}$ may have been stored at the previous iteration of the decoding method. According to an initializing step not shown on figure 1, the parameters may be initialized at the beginning of the sequence, such that for the first frame of the sequence t=1, the parameters $\tilde{\theta}_1$ of the INR themselves are decoded from the bitstream. In a third step 530, the one or more parameters of the at least one current INR network are reconstructed from the decoded residual data and the one or more parameters of at least one previous INR network. A sum of the residual data for INR parameters $m_t$ and the parameters of the previous frame $t - 1$ as $\tilde{\theta}_t = m_t + \tilde{\theta}_{t-1}$ is computed to output the reconstructed parameters $\tilde{\theta}_t$ of the current frame $t$. As for the encoding, the parameters $\tilde{\theta}_t$ of the current INR and the parameters $\tilde{\theta}_{t-1}$ of the previous INR may be processed. For instance, a process applied to INR parameters may be an inverse quantization process. Then, in the step (540), to decompress the signal, the INR network instantiated with the parameters $\tilde{\theta}_t$ is evaluated at all relevant coordinates, for instance, all pixel coordinates for an image. In the following, different variants for decoding a signal using differential coding of INR are described.

Feature(s) associated with differential decoding after quantization step.

FIG. 7 illustrates a process to decode 700 a signal using differential coding of INR after a quantization step, according to one or more embodiments of the present disclosure. Let g be a sequence (or GOP) of images to encode, K be the number of images in the sequence. At decoder side, the reconstruction of the parameters from the bitstream is performed as follows. Preliminary, in a step not shown on FIG. 7, some metadata which may be signaled in the bitstream, may be decoded. For instance, the metadata comprises NNC metadata representative of the architecture of the neural network, number of layers, etc.. As previously, FIG. 7 illustrates the steps applied to decode a frame t based on the information of a preceding frame t-1 (i.e. for t=2... K). The steps of FIG.7 may also apply to the first frame given that the buffer storing the weight of the previous frame is the initializing to a default value. Once it is done, then the parameters of the INR may be decoded as follows:

- For each GOP,

    ○ For the intra-frame,

        ■ Decode the quantized parameters $\widehat{\theta_1}$ from the bitstream using the entropic decoder
        ■ Apply the dequantization to obtain the dequantized parameters, as $\tilde{\theta}_1 = Q^{-1}(\hat{\theta}_1)$

        ■ Using $\tilde{\theta}_1$ as the parameters for the INR, reconstruct the intra-frame ■ Store the $\widehat{\theta_1}$ in a buffer

    ○ for t=2... K

        ■ Decode 710 the differential parameters $m_t$ from the bitstream using the entropic decoder
        ■ From the buffer, get (720) the quantized $\hat{\theta}_{t-1}$
        ■ Reconstruct 730 the current quantized parameters as $\hat{\theta}_t = \hat{\theta}_{t-1} + m_t$
        ■ Apply dequantization step, and obtain (740) the reconstructed parameters as $\tilde{\theta}_t = Q^{-1}(\hat{\theta}_t)$
        ■ Replace the buffer with $\tilde{\theta}_t$
        ■ Using $\tilde{\theta}_t$ as the parameters for the INR, reconstruct the frame $t$ (not shown on FIG. 7)

Feature(s) associated with differential decoding after quantization and dequantization step.

FIG. 9 illustrates a process to decode 900 a signal using differential coding of INR after a quantization and a dequantization step, according to one or more embodiments of the present disclosure. Let g be a sequence (or GOP) of images to encode, K be the number of images in sequence. As previously, FIG. 9 illustrates the steps applied to decode a frame t based on the information of a preceding frame t-1 (i.e. for t=2... K). In this embodiment, the decoding procedure may also be applied after the dequantization step as follows:

- For each GOP,

    ○ For the intra-frame,

        ■ Decode the quantized parameters $\widehat{\theta_1}$ from the bitstream using the entropic decoder
        ■ Apply the dequantization to obtain the dequantized parameters, as $\tilde{\theta}_1 = Q^{-1}(\hat{\theta}_1)$
        ■ Store the $\tilde{\theta}_1$ is a buffer
        ■ Using $\tilde{\theta}_1$ as the parameters for the INR, reconstruct the frame 1 in the GOP

    ○ for t=2... K

        ■ Decode 910 the differential parameters $m_t$ from the bitstream using the entropic decoder
        ■ From the buffer, get 920 the dequantized parameters $\tilde{\theta}_{t-1}$

- Reconstruct 930 the current dequantized parameters as $\tilde{\theta}_t = \tilde{\theta}_{t-1} + m_t$
- Replace the buffer with $\tilde{\theta}_t$
- Using $\tilde{\theta}_t$ as the parameters for the INR, reconstruct the frame $t$ Feature(s) associated with differential decoding using NNC.

FIG. 11 illustrates a process to decode 1100 a signal using differential coding of INR with NNC according to one or more embodiments of the present disclosure. Let g be a sequence (or GOP) of images to encode, K be the number of images in sequence. In this variant, a decoding procedure corresponding the 2 above variants may also be applied when the NNC standard is used. A NNC process may take as the inputs a NNC bitstream, and may output the reconstructed dequantized parameters of the INR. In such variant, the decoding process may perform differential decoding as follows:

- For each GOP,

  ◦ For the intra-frame,

    - From the NNC bitstream, obtain the reconstructed parameters using NNC reconstruction, as $\tilde{\theta}_1 = NNC\_reconstruct(bitstream_1)$
    - Store the $\tilde{\theta}_1$ in the buffer as, $temp = \tilde{\theta}_1$ for the next step
    - Using $\tilde{\theta}_1$ as the parameters for the INR, reconstruct the frame 1 in the GOP

  ◦ for t=2... K

    - Reconstruct 1110 the dequantized $m_t$ from the NNC bitstream, as $$\widetilde{m_t} = NNC\_reconstruct(bitstream_t)$$
    - From the buffer, obtain 1120 $\tilde{\theta}_{t-1}$
    - Obtain 1130 the dequantized/reconstructed current parameters as $\tilde{\theta}_t = \tilde{\theta}_{t-1} + \widetilde{m_t}$
    - Replace the buffer with $\tilde{\theta}_t$
    - Using $\tilde{\theta}_t$ as the parameters for the INR, reconstruct the frame $t$ (not shown on FIG. 11)

In the above, the proposed methods are mainly described with respects to 2D video compression. However, INR is investigated for many other signals, in particular 3D scenes or objects, and the proposed methods may be used for any signal. With respect to the bitstream, we mention that the bitstream is to be transmitted. It should be noted that the bitstream may also be stored in a storage.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.    A method for decoding video data representative of a sequence of images or of 3D scene, comprising:

decoding (510) residual data for one or more parameters of at least one current INR (Implicit Neural Representation) network for a current image of the sequence of images or of 3D scene;
obtaining (520) one or more parameters of at least one previous INR network for a previous image of the current image in the sequence of images or of 3D scene;
reconstructing (530) the one or more parameters of the at least one current INR network based on the decoded residual data and the one or more parameters of at least one previous INR network; and
reconstructing (540) the current image based on the at least one current INR network.

2.    The method of claim 1, further comprising:
obtaining one or more quantized parameters of the at least one previous INR network by reconstructing the one or more parameters of the at least one previous INR network;
and wherein the residual data are obtained from a difference between the one or more parameters of the at least one current INR network and one or more quantized parameters of the at least one previous INR network and the residual data are decoded using standardized Neural Network Coding (NNC).

3.    The method of any of claims 1 or 2, wherein one or more parameters of at least one current INR network comprises parameters of non-approximated parts and approximated parts of INR networks using dictionary approximation.

4.    A method for encoding video data representative of a sequence of images or of 3D scene, comprising:

obtaining (410) one or more parameters of at least one current INR (Implicit Neural Representation) network for a current image of the sequence of images or of 3D scene;
obtaining (420) one or more parameters of at least one previous INR network for a previous image of the current image in the sequence of images or of 3D scene; and
encoding (430) residual data between the one or more parameters of the at least one current INR network and the one or more parameters of the at least one previous INR network.

5.    The method of claim 4, further comprising:
quantizing the one or more parameters of the at least one current INR network;
and wherein the residual data are obtained from a difference between the one or more quantized parameters of the at least one current INR network and one or more quantized parameters of the at least one previous INR network.

6.    The method of claim 4, further comprising:

quantizing the one or more parameters of the at least one current INR network;
obtain one or more inverse quantized parameters of the at least one current INR network by inverse quantizing the one or more quantized parameters of the at least one current INR network;

and wherein the residual data are obtained from a difference between the one or more inverse quantized parameters of at least one current INR network and one or more inverse quantized parameters of the at least one previous INR network.

7. The method of any of claims 5 or 6 wherein the residual data are entropy encoded.

8. The method of claim 4, further comprising:
obtaining one or more quantized parameters of the at least one previous INR network by reconstructing the one or more parameters of the at least one previous INR network;
and wherein the residual data are obtained from a difference between the one or more parameters of the at least one current INR network and one or more quantized parameters of the at least one previous INR network and the residual data are encoded using standardized Neural Network Coding (NNC).

9. The method of any claim 8, further comprising:
encoding hyperparameter comprising at least one of a number of images in the sequence of images, quantization parameters, a quantization scheme or an entropy coding scheme.

10. The method of claim 4, wherein one or more parameters of at least one current INR (Implicit Neural Representation) network comprises parameters of non-approximated parts and approximated parts of INR networks using dictionary approximation.

11. An apparatus for decoding video data representative of a sequence of images or a 3D scene, comprising at least one memory or one or more processors, wherein the one or more processors are configured to:

decode residual data for one or more parameters of at least one current INR (Implicit Neural Representation) network for a current image of the sequence of images or of 3D scene;
obtain one or more parameters of at least one previous INR network for a previous image of the current image in the sequence of images or of 3D scene;
reconstruct the one or more parameters of the at least one current INR network based on the decoded residual data and the one or more parameters of at least one previous INR network; and
reconstruct the current image based on the at least one current INR network.

12. The apparatus of claim 11, wherein the one or more processors are configured to obtain one or more coefficients by performing:
obtain one or more quantized parameters of the at least one previous INR network by reconstructing the one or more parameters of the at least one previous INR network;
and wherein the residual data are obtained from a difference between the one or more parameters of the at least one current INR network and one or more quantized parameters of the at least one previous INR network and the residual data are decoded using standardized Neural Network Coding (NNC).

13. An apparatus for encoding video data representative of a sequence of images or a 3D scene, comprising at least one memory and one or more processors, wherein the one or more processors are configured to:

obtain one or more parameters of at least one current INR (Implicit Neural Representation) network for a current image of the sequence of images or of 3D scene;
obtain one or more parameters of at least one previous INR network for a previous image of the current image in the sequence of images or of 3D scene; and
encode residual data between the one or more parameters of the at least one current INR network and the one or more parameters of the at least one previous INR network.

14. The apparatus of claim 13, wherein the one or more processors are configured to:
obtain one or more quantized parameters of the at least one previous INR network by reconstructing the one or more parameters of the at least one previous INR network;
and wherein the residual data are obtained from a difference between the one or more parameters of the at least one current INR network and one or more quantized parameters of the at least one previous INR network and the residual data are encoded using standardized Neural Network Coding (NNC).

15. The apparatus of any of claim 11 or claim 13, wherein one or more parameters of at least one current INR network comprises parameters of non-approximated parts and approximated parts of INR networks using dictionary approximation.

**FIG. 1**

210                                       220

200

# FIG. 2

input signal

| Learn INR parameters | 310 |

| Encode INR parameters | 320 |

bitstream

# FIG. 3

300

input signal

| Obtain INR for a current image | 410 |
| Obtain INR for a previous image | 420 |
| Encode residual INR parameters | 430 |

output bitstream

400

# FIG. 4

input bitstream

| Decode residual INR parameters for a current image | 510 |
| Obtain INR parameters for a previous image | 520 |
| Reconstruct the INR network | 530 |
| Reconstruct the current image | 540 |

500

# FIG. 5

INR parameters

↓

| Quantize INR parameters for a current image | 610 |

↓

| Obtain quantized INR parameters for a previous image | 620 |

↓

| Obtain residual INR Parameters from difference of quantized INR parameters | 630 |

↓

| Entropy Encode residual INR parameters | 630 |

↓

# FIG. 6

600

---

input bitstream

↓

| Entropy Decode residual INR parameters | 710 |

↓

| Obtain quantized INR parameters for previous image | 720 |

↓

| Reconstruct current INR Quantized Parameters from sum of previous quantized INR parameters and residual INR parameters | 730 |

↓

| Dequantize the current INR parameters | 740 |

↓

700

# FIG. 7

INR parameters

Quantize INR parameters for a current image — 810

Dequantize Quantized current INR parameters — 820

Obtain dequantized INR parameters for a previous image — 830

Obtain residual INR Parameters from difference of dequantized INR parameters — 840

Entropy Encode residual INR parameters — 850

800

# FIG. 8

input bitstream

Entropy Decode residual INR parameters — 910

Obtain dequantized INR parameters for previous image — 920

Reconstruct current INR Parameters
from sum of previous dequantized INR parameters and residual INR parameters — 930

900

# FIG. 9

INR parameters

|

Obtain dequantized INR parameters for a previous image    ∿ 1010

|

Obtain residual INR Parameters from difference of current INR paramaters and dequantized previous INR parameters    ∿ 1020

|

NNC Encode residual INR parameters    ∿ 1030

|

1000

# FIG. 10

input bitstream

|

NNC reconstruct residual INR parameters    ∿ 1110

|

Obtain quantized INR parameters for a previous image    ∿ 1120

|

Reconstruct current INR Parameters
from sum of previous quantized INR parameters and
residual INR parameters    ∿ 1130

|

1100

# FIG. 11

| | Europäisches Patentamt / European Patent Office / Office européen des brevets | **EUROPEAN SEARCH REPORT** | **Application Number** EP 24 30 6358 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHISHIRA R MAIYA ET AL: "NIRVANA: Neural Implicit Representations of Videos with Adaptive Networks and Autoregressive Patch-wise Modeling", ARXIV.ORG, CORNELL UNIVERSITY LIBRARY, 201 OLIN LIBRARY CORNELL UNIVERSITY ITHACA, NY 14853, 30 December 2022 (2022-12-30), XP091404695, | 1,3,4, 10,11, 13,15 | INV. H04N19/50 |
| Y | * abstract; figure 2; table 1 * <br> * Sections 3.2, 3.3, A.2 * <br> * Algorithm 1 on page 5 * <br> ----- | 2,5-9, 12,14 | |
| X | US 2022/385907 A1 (ZHANG YUNFAN [NL] ET AL) 1 December 2022 (2022-12-01) | 1,3,4, 10,11, 13,15 | |
| Y | * abstract; figures 4, 7A, 7B, 11 * <br> * paragraph [0213] - paragraph [0230] * <br> * paragraphs [0159], [0163] * <br> ----- | 2,5-9, 12,14 | |
| Y,D | "Text of ISO/IEC FDIS 15938-17 Compressed representation of neural networks for multimedia content description and analysis (2nd edition)", 142. MPEG MEETING; 20230424 - 20230428; ANTALYA; (MOTION PICTURE EXPERT GROUP OR ISO/IEC JTC1/SC29/WG11), , no. n22561 19 June 2023 (2023-06-19), XP030311010, Retrieved from the Internet: URL:https://dms.mpeg.expert/doc_end_user/d ocuments/142_Antalya/wg11/MDS22561_WG04_N0 0328.zip ISO_IEC_FDIS_15938-17_ed2.docx [retrieved on 2023-06-19] | 2,5-9, 12,14 | **TECHNICAL FIELDS SEARCHED (IPC)** <br><br> H04N |
| A | * the whole document * <br><br> ----- <br> -/-- | 1,3,4, 10,11, 13,15 | |

The present search report has been drawn up for all claims

| Place of search | Date of completion of the search | Examiner |
|---|---|---|
| The Hague | 28 January 2025 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEIHAO WANG ET AL: "Neural Implicit Dictionary via Mixture-of-Expert Training", ARXIV.ORG, CORNELL UNIVERSITY LIBRARY, 201 OLIN LIBRARY CORNELL UNIVERSITY ITHACA, NY 14853, 8 July 2022 (2022-07-08), XP091265963, * abstract * | 1-15 | |

-----

**TECHNICAL FIELDS SEARCHED (IPC)**

The present search report has been drawn up for all claims

| Place of search | Date of completion of the search | Examiner |
|---|---|---|
| The Hague | 28 January 2025 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

page 2 of 2

## EP 4 697 717 A1

### ANNEX TO THE EUROPEAN SEARCH REPORT
### ON EUROPEAN PATENT APPLICATION NO.

EP 24 30 6358

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| US 2022385907 | A1 | 01-12-2022 | BR 112023023427 | A2 | 30-01-2024 |
| | | | EP 4342178 | A1 | 27-03-2024 |
| | | | JP 2024519791 | A | 21-05-2024 |
| | | | KR 20240012374 | A | 29-01-2024 |
| | | | TW 202247650 | A | 01-12-2022 |
| | | | US 2022385907 | A1 | 01-12-2022 |
| | | | WO 2022245434 | A1 | 24-11-2022 |

EPO FORM P0459

For more details about this annex : see Official Journal of the European Patent Office, No. 12/82

22

**EP 4 697 717 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23305282
- EP 23306188
- EP 23306514